# EUROPEAN PATENT APPLICATION

(11) **EP 3 310 017 A1**
(43) Date of publication of application: **18.04.2018**
(21) Application number: 16306353.0
(22) Date of filing: 14.10.2016
(51) Int. Cl.: H04L 29/06

(54) **ELECTRONIC DEVICE FOR TWO FACTOR AUTHENTICATION**

(71) Applicant: Alcatel Lucent, 91620 Nozay (FR)
(72) Inventor: PONTOIS, Cedric, 91620 NOZAY (FR); DUBUS, Samuel, 91620 NOZAY (FR)
(74) Representative: Mouney, Jérôme

(57) **Abstract**

For a two factor authentication, a server (SS) is configured to
receive an one time code (OtC) and an identifier (IdED) of an electronic device (ED) from an application server (AS),
identify a public key associated with the received identifier (IdED) of electronic device,
encrypt the received one time code (OtC) with the identified public key,
send the encrypted one time code (OtC) to the electronic device (ED) through a telecommunication network (TN2) providing an ultra narrow band radio connection,
and the electronic device (ED) is configured to
receive the encrypted one time code through the ultra narrow band radio connection,
decrypt the received one time code with a private key associated with the electronic device (ED),
display the decrypted one time code on a screen of the electronic device (ED).

## Description

### FIELD OF INVENTION

The present subject matter generally relates to the authentication via two factor authentication and, more particularly, to an authentication method using an electronic device as hardware token.

### BACKGROUND

Electronic tokens are based on a shared secret (same secret inside a company server and a token hardware). These electronic tokens have an important weakness in the security robustness: if the server is hacked, the entire set of hardware tokens cannot be trusted anymore and must be replaced.

Main two-factor authentication solutions used today for on-line shopping or on-line account/service authentication are of the following kinds.
- physical token;
- code sent to mobile phone via SMS (Mobile phone two-factor authentication);
- software (soft token) installed on a terminal (computer, mobile phone, etc.).

Unfortunately, major disadvantages of these solutions exist. For physical token, if the server is hacked, all tokens must be replaced because the same secret is shared between the server and the tokens. For mobile phone two-factor authentication, mobile phones must be operational (e.g. not discharged, in range of cellular network), mobile phones are now used on-line for both access/shopping and email access and basically meaning the two-factor (SMS + on line connection) are finally combined in "one factor". Then, if the mobile phone is stolen or hijacked, the thief gains access to the whole credentials in one time. Also SMS can now be intercepted at radio network level very easily with low cost piece of equipment. For software (soft token): similarly to the mobile phones, the two-factor are finally combined in "one factor". If an attacker gain access to the terminal, it can use and exploit both channels of two factors authentication.

Finally, there is a need for providing solution still usable and secure even if he server has been hijacked.

### SUMMARY

This summary is provided to introduce concepts related to the present inventive subject matter. This summary is not intended to identify essential features of the claimed subject matter nor is it intended for use in determining or limiting the scope of the claimed subject matter. In one implementation, a method for a two factor authentication is described. The method comprises the following steps in an electronic device:
receiving an one time code encrypted with a public key associated with electronic device from a server as a second factor for authentication, through an ultra narrow band radio connection,
decrypting the received one time code with a private key associated with the electronic device,
displaying the decrypted one time code on a screen of the electronic device.

Advantageously, both channel of information used for two-factor authentication (2FA) are dissociated: one factor use internet and/or intranet, the other use UNB network. Either if the token channel is sniffed (ultra narrow band radio), the secrecy is preserved thanks to the encryption. Even if the public key (stored on server) is stolen, the associated electronic key can still be used and trusted, which enhances reliability against server attack (only public key is stored on server).

The token solution is autonomous from energy point of view: using lithium battery for instance, the token can work many years if it is wake up only on-demand. In addition, ultra narrow band radio technology is designed and efficient to minimize power consumption. Also the token can be individually easily revoked by blacklisting its public key.

In an embodiment, the steps of receiving and decrypting are performed by a system on chip.

In an embodiment, the private key is stored in said system on chip.

In an embodiment, the ultra narrow band radio connection has a bandwidth less than 25 kHz.

In another implementation an electronic device is described. The electronic device, comprises:
means for receiving an one time code encrypted with a public key associated with electronic device from a server as a second factor for authentication, through an ultra narrow band radio connection,
means for decrypting the received one time code with a private key associated with the electronic device,
means for displaying the decrypted one time code on a screen of the electronic device.

In an embodiment, the means for receiving and the means for decrypting are built in a system on chip.

In an embodiment, the electronic device comprises means putting the electronic device in "sleeping" state.

In an embodiment, the electronic device comprises a button delivering power for a determined time.

In another implementation, method for a two factor authentication, comprises the following steps in a server:
receiving an one time code as a second factor for authentication and an identifier of an electronic device from an application server providing a service requiring a two factor authentication and having performed a first factor authentication,
identifying a public key associated with the received identifier of electronic device,
encrypting the received one time code with the identified public key,
sending the encrypted one time code to the electronic device through a telecommunication network providing an ultra narrow band radio connection.

In another implementation, a server for a two factor authentication, comprises:
memory to store computer executable instructions; and
a processor to access the memory and execute the computer executable instructions to:
   receive an one time code as a second factor for authentication and an identifier of an electronic device from an application server providing a service requiring a two factor authentication and having performed a first factor authentication,
   identify a public key associated with the received identifier of electronic device, encrypts the received one time code with the identified public key,
   sends the encrypted one time code to the electronic device through a telecommunication network providing an ultra narrow band radio connection.

In another implementation, a method for a two factor authentication, comprises the following steps:
receiving in a server an one time code as a second factor for authentication and an identifier of an electronic device from an application server providing a service requiring a two factor authentication and having performed a first factor authentication,
identifying in the server a public key associated with the received identifier of electronic device,
encrypting in the server the received one time code with the identified public key,
sending in the server the encrypted one time code to the electronic device through a telecommunication network providing an ultra narrow band radio connection
receiving in an electronic device an one time code encrypted with a public key associated with electronic device from a server as a second factor for authentication, through an ultra narrow band radio connection,
decrypting in an electronic device the received one time code with a private key associated with the electronic device,
displaying in an electronic device the decrypted one time code on a screen of the electronic device

In another implementation, a system for a two factor authentication, comprises
a server configured to
receive an one time code as a second factor for authentication and an identifier of an electronic device from an application server providing a service requiring a two factor authentication and having performed a first factor authentication,
identify a public key associated with the received identifier of electronic device,
encrypt the received one time code with the identified public key,
send the encrypted one time code to the electronic device through a telecommunication network providing an ultra narrow band radio connection,
the electronic device configured to
receive the encrypted one time code through the ultra narrow band radio connection,
decrypt the received one time code with a private key associated with the electronic device,
display the decrypted one time code on a screen of the electronic device.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 illustrates a schematic block diagram of a communication system according to one embodiment of the invention for a two factor authentication.
Figure 2 illustrates a flow chart illustrating a method for a two factor authentication according to one embodiment of the invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

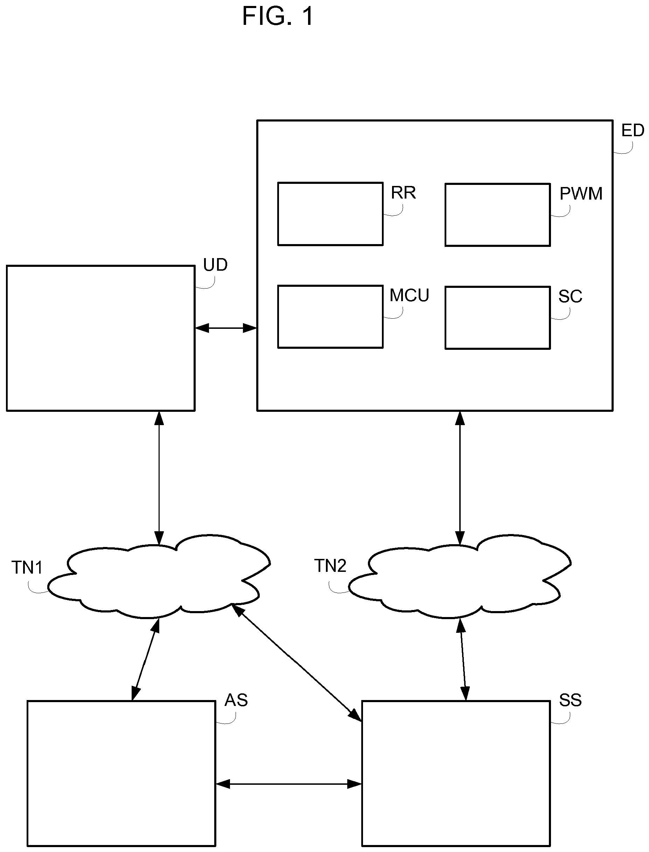

Referring to FIG. 1, a communication system comprises an application server AS, a security server SS, a user device UD and an electronic device ED. The user device UD and the application server AS communicate between them through a first telecommunication network TN1 and the security server SS and the electronic device communicate between them through a second telecommunication network TN2.

The first telecommunication network TN1 may include the Internet or any network capable of communicating data between devices, being a wireless or wired network or a combination of wired and wireless networks. The first telecommunication network TN1 can be associated with a packet network, for example, an IP ("Internet Protocol") high-speed network such as the Internet or an intranet, or even a company-specific private network.

For example, the first telecommunication network TN1 is a digital cellular radio communication network of the GPRS (General Packet Radio Service), UMTS (Universal Mobile Telecommunications System), CDMA (Code Division Multiple Access) type, LTE (Long Term Evolution) or even 5G (Fifth Generation) type. Furthermore, the first telecommunication network TN1 can be accessed by a user device via a wireless link, such as a Wi-Fi network or a Bluetooth link, or via a wired link such as Ethernet

The user device UD is able to communicate with the application server AS. The user device UD can be a mobile terminal, a personal computer or other client device such as a smartphone, a tablet. The user device UD is equipped with an application or a browser able to connect to the application server AS and use a service provided by this latter.

The application server AS provides a service requiring a two factor authentication. For example, the application server AS can host a website for on-line service or bank service. For example, the first factor authentication is performed by means of login and credentials sent by the user device. The second factor authentication is performed by means of an encrypted one time code sent from the security server SS to the electronic device ED. The application server AS stores identifiers IdUD of user devices in correspondence with identifiers IdED of electronic devices.

In one embodiment, it could be assumed that an entity managing the application server AS handles the deployment of the electronic devices ED that are distributed to users having to register with a web site dedicated to the service provided by the application server AS.

The application server AS and the security server SS can communicate between them through the first telecommunication network TN1 or through another network like a private network.

The security server SS stores public keys associated with identifiers IdED of electronic devices. The security server encrypts a one time code received from the application server with a public key associated with an electronic device.

The security server SS sends the encrypted one time code through a second telecommunication network TN2 for delivery to the identified electronic device.

The second telecommunication network TN2 uses a ultra narrow band radio system, like "Sigfox", "LoRa", "Weightless-N", or a digital cellular radio communication network of 5G (Fifth Generation) type, having less than 25 kHz bandwidth and providing an excellent link budget due to low in-band receive noise (narrow receive filters remove most of the noise).

The electronic device ED contains a radio receiver RR associated with an antenna, a microcontroller unit MCU, a power management PWM associated with a battery, and a screen SC. The radio receiver RR, the microcontroller unit MCU and the power management unit PMU are built in a system on a chip, forming a tamper resistant module.

By default, the electronic device ED is in a "sleeping" state, i.e. it does not consume power (less than 1uA). When the user need to use it, he/she pushes a "wake up" button and the power management unit PMU provides power for a determined time, like a few minutes, to the radio receiver RR and to the microcontroller unit MCU. The electronic device is built as a tamper resistant module in order to prevent a stored private key to be extracted or read.

Thanks to an antenna, the radio signal is given to the UNB (Ultra Narrow Band) reception block of the radio receiver RR. Once the message extracted from the radio signal, this information is analyzed by the microcontroller unit MCU. If this message seems valid, the MCU decrypts it (uncipher) by using a private cryptographic key stored in a non-volatile memory (e.g. this cryptographic key is burned in a tiny ROM of the same system on a chip). If the checksum is correct (e.g. hashcode of additional information is equal), the token value and optionally transaction information (date, amount, etc.) are displayed on the screen SC of the electronic device, for a pre-defined time optionally. In one example, the screen is a small LCD display.

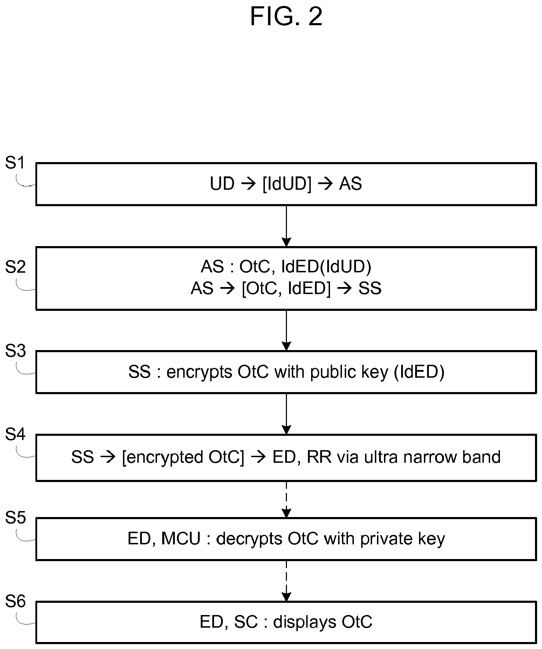

With reference to FIG. 2, a method for a two factor authentication according to one embodiment of the invention comprises steps S1 to S6 executed within the communication system.

In step S1, the user device UD connects to the application server AS, to use a service delivered by the application server AS. In one example, the application server hosts a bank service shop, receives from an online shop a purchase order for which a two factor authentication is required. In another example, the application server hosts a VPN access for a private network and receives directly from the user device an access request for which a two factor authentication is required.

To that end, the user device UD sends at least one request with an identifier IdUD of the user device to the application server AS.

In step S2, once a first factor authentication is performed, the application server AS triggers a second factor authentication. For example, the user has entered login and credentials for the first factor authentication and then is asked to enter a value that will be displayed on the electronic device ED.

The application server AS generates a one time code OtC and identifies an identifier IdED of electronic device that is stored in correspondence with the received identifier IdUD of user device The application server AS sent a message to the security server SS, the message containing the one time code OtC and the identifier IdED of electronic device.

Optionally, if the application server AS host a bank service, it can add to the one time code some transaction details (merchant, amount, time/date, etc.) which could be used to produce a hashcode that is sent in place of the one time code to the security server SS.

In step S3, the security server SS identifies a public key associated with the received identifier IdED of electronic device. The security server SS encrypts the received one time code OtC with the identified public key associated with the electronic device.

In step S4, the security server SS sends the encrypted one time code OtC to the electronic device ED through an ultra narrow band radio connection. The electronic device ED is identified by means of the identifier IdED of electronic device. For example the identifier IdED of electronic device is stored in correspondence with a set of parameters of the electronic device, including the details required to send information to the electronic device. For example the set of parameters of the electronic device include the type a ultra narrow band radio connection through which the electronic device can be reached and the the security server SS selects the appropriate network delivering such ultra narrow band radio connection.

In step S5, the electronic device ED receives the encrypted one time code OtC by means of the radio receiver RR, via the ultra narrow band radio connection. The second telecommunication network TN2 providing the ultra narrow band technology can broadcast a message containing the encrypted one time code OtC, only the electronic device having the right private key being able to decrypt the encrypted one time code OtC.

In one embodiment, the electronic device ED can send periodically messages to the second telecommunication network TN2, the messages being uplink message containing an identifier of the electronic device, in order to localize the electronic device ED in a cell of the second telecommunication network and thus limit the broadcast of the message containing the encrypted one time code OtC.

The microcontroller unit MCU of the electronic device decrypts the received one time code OtC with the private key associated with the electronic device.

In step S6, the electronic device displays the decrypted one time code on the screen SC of the electronic device. The user can then read the value displayed on the screen to finish the second authentication, for example by entering said value in an application implemented in the user device UD and connected to the application server AS.

An embodiment comprises a server comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

## Claims

1. A method for a two factor authentication, the method comprising the following steps in an electronic device (ED):
receiving (S5) an one time code encrypted with a public key associated with an electronic device (ED) from a server (SS) as a second factor for authentication, through an ultra narrow band radio connection,
decrypting (S5) the received one time code with a private key associated with the electronic device (ED),
displaying (S6) the decrypted one time code on a screen of the electronic device (ED).

2. The method as claimed in claim 1, wherein the steps of receiving and decrypting are performed by a system on chip.

3. The method as claimed in claim 2, wherein the private key is stored in said system on chip.

4. The method as claimed in any of the preceding claims, wherein the ultra narrow band radio connection has a bandwidth less than 25 kHz.

5. An electronic device (ED) for a two factor authentication, comprising:
means (RR) for receiving an one time code encrypted with a public key associated with the electronic device (ED) from a server (SS) as a second factor for authentication, through an ultra narrow band radio connection,
means (MCU) for decrypting the received one time code with a private key associated with the electronic device (ED),
means (SC) for displaying the decrypted one time code on a screen of the electronic device (ED).

6. An electronic device (ED) as claimed in claim 5, wherein the means (RR) for receiving and the means for decrypting (MCU) are built in a system on chip.

7. An electronic device (ED) as claimed in claim 5 or 6, comprising means (PMU) putting the electronic device in "sleeping" state.

8. An electronic device (ED) as claimed in claim 7, comprising a button delivering power for a determined time.

9. A method for a two factor authentication, the method comprising the following steps in a server (SS):
receiving (S2) an one time code (OtC) as a second factor for authentication and an identifier (IdED) of an electronic device (ED) from an application server (AS) providing a service requiring a two factor authentication and having performed a first factor authentication,
identifying (S3) a public key associated with the received identifier (IdED) of electronic device,
encrypting (S3) the received one time code (OtC) with the identified public key,
sending (S4) the encrypted one time code (OtC) to the electronic device (ED) through a telecommunication network (TN2) providing an ultra narrow band radio connection.

10. A server (SS) for a two factor authentication, comprising:
memory to store computer executable instructions; and
a processor to access the memory and execute the computer executable instructions to:
receive an one time code (OtC) as a second factor for authentication and an identifier (IdED) of an electronic device (ED) from an application server (AS) providing a service requiring a two factor authentication and having performed a first factor authentication,
identify a public key associated with the received identifier (IdED) of electronic device,
encrypts the received one time code (OtC) with the identified public key,
sends the encrypted one time code (OtC) to the electronic device (ED) through a telecommunication network (TN2) providing an ultra narrow band radio connection.

11. A method for a two factor authentication, the method comprising the following steps:
receiving (S2) in a server (SS) an one time code (OtC) as a second factor for authentication and an identifier (IdED) of an electronic device (ED) from an application server (AS) providing a service requiring a two factor authentication and having performed a first factor authentication,
identifying (S3) in the server (SS) a public key associated with the received identifier (IdED) of electronic device,
encrypting (S3) in the server (SS) the received one time code (OtC) with the identified public key,
sending (S4) in the server (SS) the encrypted one time code (OtC) to the electronic device (ED) through a telecommunication network (TN2) providing an ultra narrow band radio connection
receiving (S5) in an electronic device (ED) an one time code encrypted with a public key associated with electronic device (ED) from a server (SS) as a second factor for authentication, through an ultra narrow band radio connection,
decrypting (S5) in an electronic device (ED) the received one time code with a private key associated with the electronic device (ED),
displaying (S6) in an electronic device (ED) the decrypted one time code on a screen of the electronic device (ED).

12. A system for a two factor authentication, comprising a server (SS) configured to
receive an one time code (OtC) as a second factor for authentication and an identifier (IdED) of an electronic device (ED) from an application server (AS) providing a service requiring a two factor authentication and having performed a first factor authentication,
identify a public key associated with the received identifier (IdED) of electronic device, encrypt the received one time code (OtC) with the identified public key,
send the encrypted one time code (OtC) to the electronic device (ED) through a telecommunication network (TN2) providing an ultra narrow band radio connection,
and comprising the electronic device (ED) configured to
receive the encrypted one time code through the ultra narrow band radio connection, decrypt the received one time code with a private key associated with the electronic device (ED),
display the decrypted one time code on a screen of the electronic device (ED).
